# EUROPEAN PATENT APPLICATION

(11) **EP 4 219 412 A1**
(43) Date of publication of application: **02.08.2023**
(21) Application number: 22153788.9
(22) Date of filing: 27.01.2022
(51) Int. Cl.: C02F 9/00, C08F 6/16, C02F 1/26, C02F 1/28, C02F 1/34, C02F 1/42, C02F 1/44, C02F 1/46, C02F 1/52, C02F 1/66, C02F 11/10, C02F 101/14, C02F 103/38

(54) **CLOSED-LOOP TECHNOLOGIES FOR PURIFYING FLUORINE CONTAINING WATER STREAMS**

(71) Applicant: 3M Innovative Properties Company, Saint Paul, MN 55133-3427 (US)
(72) Inventor: Hintzer, Dr. Klaus, 84556 Kastl (DE); Huber, Dr. Stefan, 84180 Loiching (DE); Krupp, Valentina, 84478 Waldkraiburg (DE); Knop, Nils, 51063 Köln (DE); Koenigsmann, Dr. Herbert, 84508 Burgkirchen (DE); Hirschberg, Dr. Markus, 84453 Mühldorf (DE); Seidl, Johannes, 84556 Kastl (DE); Streiter, André, 84453 Muehldorf am Inn (DE)
(74) Representative: Hettstedt, Stephan

(57) **Abstract**

The present disclosure provides a process for cleaning up aqueous compositions comprising fluoropolymer particles and at least one fluoroorganic compound, the process comprising the following steps
(i) Treating the aqueous composition with at least one alkylamine, at least one anion exchange resin, and/or at least one flocculant; and/or
(ii) Removing at least part of the fluoropolymer particles from the aqueous composition; and
(iii) Treating the aqueous composition with at least one semi-permeable membrane in order to remove fluoroorganic compounds.

The process is preferably carried out in a continuous mode, and the purified water stream and/or the retrieved fluoroorganic compound are preferably reintroduced into an industrial process, thereby creating a closed loop of water and/or fluoroorganic compounds such as emulsifiers.

## Description

### Field

The present disclosure relates to a process for cleaning up aqueous compositions such as water streams, in particular wastewater streams, comprising fluoropolymer particles and at least one fluoroorganic compound.

### Background

Fluorinated compositions have been used in a wide variety of applications including fluorochemicals for: water-proofing materials, fire-fighting foams for electrical and oil/grease fires, semi-conductor etching, and lubricants; and fluoropolymers for: hoses, gaskets, seals, coatings, and films. Reasons for such widespread use of fluorinated compositions include their favourable physical and chemical properties, which include chemical inertness, low coefficients of friction, low polarizabilities (i.e., fluorophilicity), and thermostability.

After production of a fluorinated composition, fluorinated compounds, including, for example, starting materials, emulsifiers, adjuvants, and reaction by-products, may be removed from the waste streams generated by the production. The removal of the fluorinated compounds may be to recover expensive starting material, to isolate valuable reaction products, to remove by-products, to prevent release into the environment, to achieve other desired composition modifications, enable reaction components, like water, to be purified for reuse or recycling and/or to avoid undesirable release of the fluorinated compounds into the environment.

Processes to remove or recover fluorinated compounds include ion exchange, ultrafiltration, distillation, liquid-liquid extraction, reverse osmosis, and adsorption on clays, carbon and other media. Such processes have been described in U.S. Publ. Nos. 2006/0205828 (Maurer et al.), 2007/0025902 (Hintzer et al.), and 2010/0084343 (Mader et al.), and U.S. Pat. Nos. 3,882,153 (Seki et al.), 4,369,266 (Kuhls, et al.), 6,642,415 (Fuhrer et al.), 7,279,522 (Dadalas et al.), and 5,603,812 (Hommeltoft). It is known that these processes may be associated with deficiencies of various degrees, such as low efficiency, high investment costs, or an increased environmental burden. Another more recent effort comprised the removal of fluoroorganic acids from aqueous media with alkylammonium compounds. However, the complete and simultaneous removal of fluoroorganic compounds and polymer particles from water streams that can be reused remains a desire in the art.

This is due to the fact that some of the existing removal technologies are able to remove e.g. fluoroorganic compounds and/or polymer particles but introduce undesired materials into the system, e.g. non-ionic surfactants, solvents, amines and the like. Additionally, some of the purifying technologies e.g. filtration processes do not work with high efficiency in the presence of polymer particles. Consequently, there exists a desire for a process which facilitates cleaning up, i.e. the purification of wastewater streams on an industrial level, in particular where the water and/or the extracted or separated compounds are resupplied into the industrial process. Of further interest is the recycling of the extracted or separated compounds.

Accordingly, there exists a desire in the art to provide cost-efficient, effective and environmentally benign technology for cleaning up or purification of aqueous compositions for large-scale industrial processes so that a closed loop water system can be established and valuable fluorinated materials can be recovered and reused.

### Summary

The present disclosure provides a process for cleaning up aqueous compositions comprising fluoropolymer particles and at least one fluoroorganic compound, the process comprising the following steps
(i) Treating the aqueous composition with at least one alkylamine, at least one anion exchange resin, and/or at least one flocculant; and/or
(ii) Removing at least part of the fluoropolymer particles from the aqueous composition; and
(iii) Treating the aqueous composition with at least one semi-permeable membrane in order to remove fluoroorganic compounds.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of' in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a process for cleaning up aqueous compositions comprising fluoropolymer particles and at least one fluoroorganic compound, the process comprising the following steps
(i) Treating the aqueous composition with at least one alkylamine, at least one anion exchange resin, and/or at least one flocculant; and/or
(ii) Removing at least part of the fluoropolymer particles from the aqueous composition; and
(iii) Treating the aqueous composition with at least one semi-permeable membrane in order to remove fluoroorganic compounds.

The process is preferably carried out in a continuous mode, and the purified water stream and/or the retrieved fluoroorganic compound are preferably reintroduced into an industrial process, thereby creating a closed loop of water and/or fluoroorganic compounds such as emulsifiers.

With the process according to the present disclosure, an efficient and effective removal of fluoroorganic compounds and fluoropolymer particles from aqueous compositions becomes feasible. The process is particularly suited for cleaning up and purification of water streams such as wastewater or process water streams in industrial processes. The purified water stream obtained by the process according to the process described herein may then be reused or reintroduced into the industrial process, thereby establishing a closed loop of the water. This is highly advantageous from both an economic and ecologic point of view. According to the process described herein, the fluoroorganic compounds separated from the aqueous composition may also be reused and reintroduced into the industrial process. For example, the fluoroorganic compound may be selected from the group of fluorinated emulsifiers. After separation from the aqueous composition, e.g. an industrial wastewater or process water stream, the separated and optionally purified emulsifier may then be reintroduced into the industrial process, e.g. a polymerization of fluorinated polymers. While the separation of fluoroorganic compounds from industrial process waters or wastewater streams has to follow increasingly stricter regulations, recycling of fluorinated emulsifiers into an industrial polymerization process gives advantageously also rise to economical benefits. Hence, also at least part of the at least one fluoroorganic compound in the process as described herein may be part of a closed loop in an industrial process such as a polymerization process of fluorinated polymers. Furthermore, the process according to the present disclosure provides an effective removal of fluoroorganic compounds from aqueous compositions, even in the presence of fluoropolymer particles. For example, by means of the process as described herein, the concentration of the at least one fluoroorganic compound is reduced by at least 95 %, preferably by at least 99 %, and more preferably by at least 99.9 %, based on the initial concentration of the at least one fluoroorganic compound.

Industrial wastewater streams or process water streams may contain fluoroorganic compounds. This is in particular true for industrial processes where fluorinated organic compounds are manufactured or processed. Well-known and established examples are the manufacture of fluorinated polymers, or the coating of substrates with fluorinated polymers. The term "fluoroorganic compounds" as used herein describes non-solid compounds, as opposed to the fluoropolymer particles as described herein. The molecular weight of the fluoroorganic compound may be less than 50,000 g/mol, less than 10,000 g/mol, less than 5,000 g/mol, and preferably less than 1000 g/mol. The fluoroorganic compounds are generally organic compounds which are either partially fluorinated or highly fluorinated. The at least one fluoroorganic compound may be present in the aqueous composition before treatment in step (i) in an amount in the range of from 0.1 ppm to 30,000 ppm, preferably from 0.3 to 15,000 ppm, more preferably from 1 to 6000 ppm. The fluoroorganic compounds may be neutral compounds or acidic compounds. Preferably, they are selected from fluoroorganic acidic compounds. With regard to the fluoroorganic acidic compound, the fluoroorganic acidic compounds may be selected from fluoroorganic acidic compounds such as highly fluorinated emulsifiers. In this regard, the term "highly fluorinated" has the meaning as commonly used in the art, i.e. organic compounds where most of the hydrogen atoms are replaced with fluorine atoms. Fluoroorganic emulsifiers are often present in wastewater streams containing also fluorinated polymer particles. Hence, the present disclosure provides for an efficient, economically and ecologically advantageous removal of compounds from aqueous media, for instance wastewater from industrial production sites. For instance, fluoroorganic acidic compounds which may be particulary advantageously removed by the process as described herein are known to the skilled person as PFAS, such as ADONA, Gen X, PFOA, PFOS and the like.

The at least one fluoroorganic acidic compound may be selected from aliphatic linear, branched or cyclic fluorinated acidic compounds. In this regard, the fluorinated acids may be selected from fluorinated acids comprising a carbon backbone of at least 2 carbon atoms, preferably of at least 3 carbon atoms, for example, at least 5 carbon atoms, wherein the carbon backbone optionally contains at least one oxygen atom. The fluorinated acids may be selected from fluorinated acids comprising a carbon backbone of 40 carbon atoms or less, preferably of 35 carbon atoms or less, and more preferably of 30 carbon atoms or less. It is particularly preferred that the fluorinated acids are selected from fluorinated acids comprising a carbon backbone of from 2 to 40 carbon atoms, preferably from 3 to 35 carbon atoms, and more preferably from 5 to 30 carbon atoms. The at least one fluorinated acidic compound may comprise at least one carboxylic acid moiety, at least one sulfonic acid moiety, at least one sulfate moiety, and/or at least one alcohol moiety. As known to the skilled person, fluorinated alcohols are acidic and fall under the definition of fluorinated acidic compounds as used herein and may therefore be advantageously removed by the process according to the present disclosure. The fluorinated acids comprise carboxylic acids R_{f}-COOH, sulfonic acids (R_{f}-SO₃H, sulfates R_{f}-CH₂-O-SO₃⁻), or alcohols (R_{f}-CH₂OH).

The acids/alcohols can be perfluorinated or partially fluorinated. Examples are e.g. CF₃COOH, CF₂HCOOH, C₂F₅COOH, C₂F₄H-COOH, C₄F₉-COOH, C₇F₁₅COOH, CF₃-O-(CF₂)₃-O-CF₂COOH, 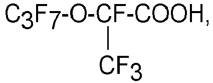 CF₃SO₃H, C₂F₅SO₃H, HOOC-(R_{f})-CF₂-SO₃H, 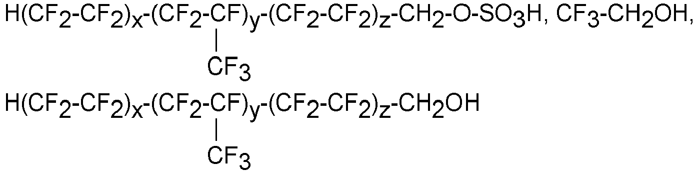 CF₃-O-(CF₂)₃-O-CFH-CF₂COOH, CF₃-O-(CF₂)₂COOH, C₂F₄HSO₃H, HO₂C-R_{f}-CO₂H, HO₃S-(R_{f})-SO₃H, CF₃-O-(CF₂)₄-CO₂H, C₃F₇O-CFH-CF₂-CO₂H, C₃F₇O-CF₂-CFH-CO₂H, CF₃-O-(CF₂)₃-O-CFH-CO₂H

In particular, some fluoroorganic acidic compounds as described herein are known as PFCA's (perfluorinated carboxylic acids). Thus, removal of present commercially available fluoroorganic acidic compounds become feasible with the process according to the present disclosure. In this regard, the fluoroorganic acidic compounds are fluorinated or perfluorinated C2 to C40 carboxylic acids. Typically, the fluoroorganic acidic compounds are present in the first solution in an amount of from 0.4 ppb to 30,000 ppm.

The process according to the present disclosure is also efficiently removing neutral fluorinated compounds having no functional and/or acid groups. Such neutral fluoroorganic compounds may be e.g. fluorinated vinyl/allylethers having from 3 to 40 carbon atoms (leftovers from polymerisation), fluorinated solvents, fluorinated ethers introduced with the monomer e.g. RfOCFHCF₃, RfOCF₂CF₂H, adjuvants to improve the efficiency of the emulsifier as described in, for example, EP250767 and WO2009/026123, neutral HFPO/fluorinated polyether etc.

Furthermore, the process as described herein is also removing efficiently undesired side products from known polymerisation processes during manufacture of fluorinated or perfluorinated polymers. Such compounds are perfluorinated or partially fluorinated from C₂-C₂₀ and may be generated by side reactions of comonomers (e. g. vinylethers), terminations by initiators or chain transfer agents; the fluoroorganic acidic compounds can have 1 to 4 hydrogen atoms or chlorine atoms within the compound.

The polymeric fluoroorganic particles present in the process as described herein are not limited inasmuch or they are able to form dispersions in protic solvents. Accordingly, this applies to many polymeric fluoroorganic particles used in many industrial processes. Preferably, wherein the polymeric fluoroorganic particles are polymeric particles selected from crystalline and semi-crystalline polymers like PFA, ETFE, FEP, PTFE, THV, PVDF, and any combinations thereof. The fluoropolymer particles may also be amorphous or crystalline, preferably consisting of polymers or copolymers comprising TFE, HFP, VDF or ethylene, and any combinations and mixtures thereof.

Additionally, the fluoropolymer particles comprise amorphous polymers based on combinations of VDF/HFP, VDF/TFE/HFP, TFE/Vinyl-/allylethers, TFE/propylene - these polymers might contain cure site monomers comprising Br, I, CN-groups. Also, amorphous polymers with ringstructures, for example Teflon^{®} AF, Hyflon^{®}, Cytop^{™} fit into the present invention. All the above-mentioned fluoropolymers may consist of at least 100 monomer units, preferably of at least 500 monomer units, and more preferably of at least 1000 monomer units.

The fluoropolymer particles as described herein may exhibit an average particle size in the range of from 30 to 300 nm. The average particle size may determined by Dynamic Light Scattering (DLS) as described in the experimental section of this disclosure. Before being first introduced into the process according to the present disclosure, i.e. before step (i) or step (ii), the fluoroorganic particles may be present in the aqueous composition in an amount of up to 50 wt.-%, based on the total weight of the aqueous composition. Preferably, the fluoroorganic particles are present before being first introduced into the process according to the present disclosure in an amount in the range of from 0.01 wt.-% to 45 wt.-%, based on the total weight of the aqueous composition.

If the content of fluoropolymer particles in the aqueous composition is considered high, e.g. higher than 0.15 wt.-%, higher than 0.2 wt.-%, higher than 0.5 wt.-%, or higher than 10 wt.-%, higher than 20 wt.-%, or even higher than 30 wt.-%, based on the total weight of the aqueous composition, it is preferred to reduce the content of fluoropolymer particles. In this regard, it is preferred that prior to step (i), the aqueous composition is processed through a multi-chamber pit and/or a separation tank, wherein a fraction of the fluoropolymer particles is separated and/or coagulated. In this regard, it is preferred that the fluoropolymer particles in the fraction of the fluoropolymer particles are larger and/or less stable than the other primary particles in the aqueous composition. During coagulation larger agglomerates of primary polymer particles are formed, which are less stable that the primary particles and can be removed, for example by means of filtration and the like. Coagulation may be induced by e.g. by applying high shear rates. While this may already remove at least part of the amount of the polymer particles or even a major part of the polymer particles from the aqueous composition, in particular a water stream, remaining polymer particles may remain not coagulated and are introduced into the downstream processes. This applies in particular for cases where no stabilizer such as non-ionic surfactant is present in the aqueous composition as described herein.

In step (i) of the process as described herein, the aqueous composition is treated with at least one alkylamine, at least one anion exchange resin, and/or at least one flocculant and/or optionally applying high shear forces. The treatment in step (i) may have different effects, such as the formation of a phase insoluble with water, which may easily separated from the aqueous phase, thereby facilitating separation of the fluoroorganic compound from the aqueous phase. Also, treatment in step (i) may have also the effect of flocculation of the fluoropolymer particles, which then may be easily separated from the aqueous phase in a subsequent step (ii) of the process according to the present disclosure.

Treatment with at least one alkylamine in step (i) is particularly preferred when the at least one fluoroorganic compound is selected from acidic fluoroorganic compounds. The treatment may comprise adding the at least one alkylamine in neat form or as a solution in at least one organic solvent. Treatment with the at least one alkylamine in neat form or as a solution preferably comprises forming a mixture by providing the extraction solution and the aqueous composition, bringing both into contact with each other, and may further include mixing, stirring, agitating or other steps well-known to the skilled person to form a mixture from two liquid components. It is preferred that the pH of the aqueous composition at this point is below 6, and preferably below 4.

Then, a reaction between the alkylamine and the fluoroorganic acidic compound takes place, in which it is assumed that a hydrophobic ionic compound is formed. In this regard, "reacting" includes "allowing to react", which means the case when both components get into contact, the reaction automatically takes place.

Further, the mixture is separated into a first phase comprising the at least one protic solvent and no greater than 80% by weight, preferably no greater 50 wt.-% of the total amount of the at least one fluoroorganic acidic compound initially present in the emulsion. in step (i). In other words, the amount of the at least one fluoroorganic acidic compound is reduced by at least 20 % compared to the initial concentration in step (i). Given the hydrophobic nature of the ionic compound formed, a separation of the mixture in the two phases as described herein may readily take place once mixing as described herein is stopped. This may include transfer of the mixture as described herein into another vessel or compartment where no mixing or mixing step is being carried out. In general, and as known in the art, phase separation into the two phases as described herein may already be visible even upon inspection with the naked eye. However, determination and verification of phase separation may additionally carried out by means well-established in the art. As described above, the major part of total amount of the at least one fluoroorganic acidic compound as described herein may be removed, i.e. at least 20 wt.-%, preferably at least 30 wt.-%, and more preferably at least 50 wt.-% of the total amount of fluoroorganic acidic compound initially present in the first solution in step (i). The major part as described herein may even be greater, such as at least 80 wt.-% or even at least 90 wt.-%, based on the total amount of the at least one fluoroorganic acidic compound initially present in the first solution in step (i). By multiple extraction steps the concentration of fluoroorganic acid compounds can be reduced by more than 90 %.

Next, the first phase is removed from the second phase. Removing the second phase from the first phase may be carried out by any common means known in the art to the skilled person. Preferably, those means and methods will be selected which are suitable for continuous and/or large-scale operations. After that, the coagulated and/or agglomerated fluoroorganic polymer particles are removed from the second phase and/or the first phase in subsequent step (ii). Alternatively, the removal of the fluoroorganic polymer particles may be removed first before the first phase is removed from the second phase. In this case, the fluoroorganic polymer particles are removed from the second phase and/or the first phase and then the first phase is removed from the second phase.

In addition to water, the aqueous composition as described in the processes according to the present disclosure may further comprise at least one protic solvent. The term "protic solvent" has the meaning commonly used in the art and describes a solvent whose molecules can either donate at least one proton to other molecules. Protic solvents are generally known to the skilled person and may either be selected according to the present needs of the process and the solubility of the fluoroorganic acidic compound. However, it may also occur that the protic solvent is already part of or even constitutes the major part of an industrial wastewater and, therefore, cannot be selected. Preferably, at least one first protic solvent is selected from water, at least one alcohol, at least one acid, and any combinations and mixtures thereof. This has the advantage that a good phase separation between the first phase and the second phase may be obtained, which is generally very desirable for a good separation of the two phases. In this regard, it is preferred that the at least one alcohol is selected from methanol, ethanol, propanol, butanol, pentanol, hexanol, and any combinations and mixtures thereof. It is preferred that the pH of the aqueous media to be extracted with alkylamine is lower than 6 and preferably below 4. The pH can be adjusted by addition of acid. The acid may be selected from organic acids such as formic acid and acetic acid and from inorganic acids such as HF, H₃PO₄, H₂SO₄, HCI or HNO₃. In this regard, solutions or dilutions of these acids in water are preferably employed in the process as described herein. The water content of such acid-containing phases may be for example less than 99.9 wt.-%, less than 99 wt.-%, or even less than 98 wt.-%, based on the total weight of the dispersion. Preferably, the protic solvent phase does not contain any ionic or nonionic hydrocarbon surfactants. In this regard, it is preferred that the content of the ionic or nonionic hydrocarbon surfactants is less than 1 wt.-%, preferably less than 0.1 wt.-%, and more preferably less than 0.01 wt.-%, based on the total weight of the protic solvent phase. During treatment with alkylamine and/or anion exchange resin treatment, it is preferred that no nonionic surfactant is present.

The treatment with trialkylamines may advantageously remove acidic fluorinated compounds and polymer particles efficiently. In case that neutral fluorinated compounds are not removed completely and/or aqueous phase contains trace of amines and/or solvents, they are removed in the subsequent step.

With regard to the at least one alkylamine used in the processes according to the present disclosure, the at least one alkylamine may be selected from primary, secondary and/or tertiary alkylamines, preferably from tertiary alkylamines. The at least one alkylamine comprises linear or branched alkyl groups may comprise at least 3 carbon atoms, preferably at least 4 carbon atoms, and more preferably at least 5 carbon atoms. The at least one alkylamine may comprise linear or branched alkyl groups comprising up to 25 carbon atoms, preferably up to 20 carbon atoms, and more preferably up to 18 carbon atoms. Accordingly, it is preferred that the at least one alkylamine comprises linear or branched alkyl groups comprising from 3 to 25 carbon atoms, preferably from 4 to 20 carbon atoms, and more preferably from 5 to 18 carbon atoms. With the at least one alkylamine having carbon atoms in the preferred ranges as described herein, a particularly efficient removal of the fluoroorganic acidic compounds from the emulsion of the fluorinated polymer particles as described herein may be achieved.

The alkylamines of the present disclosure may be a liquid or a solid at room temperature. In one embodiment, the amine useful in the present disclose may be described as a water insoluble amine having a solubility in water of less than 20 mg, 10 mg, 5 mg, 3 mg, 2 mg, 1 mg, 0.75 mg, 0.5 mg, or even less than 0.25 mg per 100 mL when measured at ambient conditions.

Preferably, the at least one alkylamine is an amine according to an amine of formula (I):

NR₁R₂R₃ (I)

wherein R₁, R₂, and R₃ may be the same or different and at least one of R₁, R₂, and R₃ is a linear or branched, saturated or unsaturated carbon group, which optionally, may comprise heteroatoms, and optionally, wherein one or two of R₁ to R₃ may be a H. Preferably, any one of R₁, R₂ and R₃ comprise at least 3 carbon atoms, preferably at least 4 carbon atoms, and more preferably at least 5 carbon atoms. For example, the number of carbons in R₁-R₃ can vary, including, for example carbon backbones comprising least 5, 6, 7, 8, 10, 12, 14, 16, 20, or even 24 carbon atoms. Preferably, the at least one alkylamine as used herein is selected from trihexylamine, trioctylamine, tridecylamine, tridocecylamine, alamine, triisooctylamine, dioctyl-decylamine, N-methyl-dioctylamine, N,N-dimethyloctylamine, tributylamine, octylamine, dioctylamine, and any combinations and mixtures thereof. High purity tertiary amines advantageous for use in the process according to the present disclosure are commercially available, for example, from Cognis, Monheim, Germany under the following trade designations: "ALAMINE 300" (tri-n-octylamine), "ALAMINE 308" (tri-isooctylamine), "ALAMINE 336" (tri(C₈/C₁₀) amine), "ALAMINE 310" (tri-isodecylamine), and "ALAMINE 304" (tri-laurylamine).

The temperature of the mixture, i.e. the aqueous emulsion after addition of the at least one alkylamine, may be controlled in order to advantageously enhance the removal of the fluoroorganic acidic compounds in the process as described herein. In this regard, it is preferred that the process is conducted at a temperature of less than 80 °C, preferably less than 70 °C, more preferably of less than 60 °C. Preferably, the process is conducted at a temperature in the range of from 3 °C to 80 °C, preferably from 5 °C to 70 °C, more preferably from 10 to 60 °C, even more preferred from 15 to 50 °C. In particular, the process as described herein may be carried out at room temperature and general ambient conditions. This is very advantageous for carrying out the process on an industrial scale since neither cooling nor heating is required, which greatly helps to save on energy, equipment and resources and makes the process as described herein very advantageous from both economic and ecologic points of view.

It is further preferred that the at least one alkylamine is present in at least one organic solvent. This has the advantage that the extraction of the at least one fluoroorganic acidic compound may be sped up. In this regard, it is preferred that the at least one organic solvent is not miscible with water. This has the effect that a clear separation between an aqueous phase and an organic phase may be obtained. Preferably, the at least one organic solvent has a solubility in water at a temperature of 20 °C according to the method of the "Prüfmethoden-Verordnung (EG) Nr. 440/2008, Teil A, Methode A.6 (Test according to OECD-Prüfrichtlinie 105), preferably less than 500 ppm and more preferably less than 50 ppm. Furthermore, it is preferred that the at least one organic solvent exhibits a boiling point of at least 50 °C, preferably of at least 70 °C, and more preferably of at least 100 °C. The use of organic solvents exhibiting boiling points at ambient pressure above the aforementioned temperatures, i.e. high-boiling organic solvents, has the advantage of an improved inherent process safety in that the risk of solvent evaporating or even boiling off at the preferred temperatures of the process as described herein is greatly reduced. Preferably, the at least one organic solvent is selected from linear hydrocarbons, cyclic hydrocarbons, ethers, aromatic solvents, and any combinations and mixtures therefrom. As an alternative or in addition to the beforementioned solvents, it is preferred to use fluorinated solvents, e.g. HFE's, Novec-Fluids (available from 3M). Such solvents preferably comprise perfluorinated trialkylamines (NR₃) and/or fluorinated ethers (e.g. methoxyperfluorobutene HFE 7100). It is preferred that the boiling point of fluorinated solvents is higher than 50 °C. The non-fluorinated solvent should have no functional group, e.g. ester, ketone. Furthermore, it is preferred that the volume ratio of solvent to amine is from 1 : 1 to 1000 : 1. In this regard, it is also preferred that the molar ratio of amine to fluorinated acid/alcohol is at least 1 : 1 up to 1000 : 1, preferably from 1 : 2 up to 100 : 1. The solvents may also be halogenated such as chlorinated or fluorinated, which is advantageous in extracting the fluorinated or perfluorinated compounds in the process according to the present disclosure. In this regard, it is preferred that the at least one organic solvent is selected from optionally substituted aromatic compounds such as toluene, xylene, mesitylene, octane, gasoline, and any combinations and mixtures or halogenated derivates therefrom.

Contacting the protic, preferably aqueous composition with the at least one alkylamine, preferably present in at least one organic solvent as described herein, may be carried out by adding the at least one alkylamine to or into the aqueous emulsion. After addition, it is preferred that the resulting mixture is agitated for at least the amount of time sufficient to contact the at least one alkylamine with the fluoroorganic acidic compound present in the protic phase. As a general rule, however, the contact time between the alkylamine and the protic phase is preferably in excess of 0.1 seconds with some equipment, but generally less than 5, 4, 3, or even 2 hours. Exemplary equipment that may be used for agitation include: vortexers, agitators, sonicators, and other such equipment as known in the art.

Without wanting to be bound by theory, it is believed that the extraction of the fluoroorganic acidic compounds, in particular acids, from the protic, in particular aqueous phase with alkylamines as described herein, is effectuated with the fluoroorganic acid and the alkylamine forming an ion pair hydrophobic organic liquid. This would then separate from the aqueous phase and allow separation from the aqueous phase for further extraction and treatment. This separation is even enhanced when using at least one organic solvent as described herein when contacting the aqueous emulsion is contacted with the at least one alkylamine in the process according to the present disclosure. Because of this immiscibility, the aqueous phase and non-aqueous phase (or organic phase) generally separate after agitation has stopped. If, however, the mixture, although bi-phasic, does not phase separate on its own, measures as known in the art, may be used to promote the phase separation, including centrifugation.

The process according to the present disclosure is preferably carried out in a continuous mode. This is very advantageous for applications in industrial scale, where e.g. continuous treatment of wastewater is necessary. Preferably, the process as described herein is carried out in extraction columns, preferably multi-staged extraction columns. In this regard, it is preferred that multi-staged extraction columns as known in the art comprise at least two stages. Such devices are described e.g. in Chem. Ing. Tech. 2020, 92, 1941 - 1952. Preferably, the process is carried out in Scheibel-columns, centrifugal extractors, and other means known to the skilled person in the art. The most preferred method is the continuous, multi-stage (at least 2 stages) extraction e.g. with a Robatel-device.

After addition of the at least one alkylamine and bringing this into contact for an appropriate time with the fluoroorganic acidic compound, phase separation will occur. This will have the effect that the fluoropolymer particles will start to precipitate from the emulsion, in particular when the fluoroorganic acidic compound is an emulsifier. The coagulated particles may be wetted by the organic solvent and from a separate phase.

It is also possible that a third phase will be formed, which is (when formed) often located between the organic phase and the aqueous phase. The coagulated polymer particles can also go into the organic phase, some coagulated polymer particles might remain in the aqueous phase. It is therefore recommended to separate the coagulated materials prior further processing; in particular if a continuous, multi-stage process is applied. Thus, the organic layer contains polymer particles and solvent, which can then be easily separated from the aqueous phase. Furthermore, the coagulated fluoropolymer particles can then advantageously be separated from the organic phase (and/or aqueous phase). Therefore, in the subsequent step (ii) of the process according to the present disclosure, the fluoropolymer particles are separated from the organic phase and/or aqueous phase.

Preferably, the separation of the fluoropolymer particles from the organic phase is carried out by means of filtration, centrifugation, cyclone adsorption, and any combinations thereof. Separation of the fluoropolymer particles from the aqueous phase may also be carried out in a batch-wise or in a continuous operation mode according to the actual needs of the process and application.

With the methods and processes according to the present disclosure, it is possible to reduce the polymer solid content by at least 50 wt.-%, preferably by at least 80 wt.-%, more preferred by at least 90 wt.-% compared to the initial polymer solid content in the aqueous emulsion.

It was further found that the processes according to the present disclosure show best results when carried out at certain pH-values. In particular, it was found that the best results were obtained at low pH-values, while medium pH-values showed only mediocre results and high pH-values failed to achieve effective removal of fluoroorganic acidic compounds. Running the process as described herein at the preferred pH-values may be easily achieved by adjusting the pH-value of the aqueous phase before contacting it with the at least one alkylamine. Accordingly, it is preferred that the pH-value of the aqueous composition such as an industrial wastewater or process water stream is adjusted to less than 6, preferably less than 4, more preferably less than 3 before contacting with the extraction composition (i).

In order to run a process in the industry in an economically efficient way and in order to comply with environmental benign requirements, there is a desire in the art to recollect and, in if feasible, recycle or reuse the material and compounds used in the process. In the process according to the present disclosure, it is desirable to at least recollect the at least one alkylamine used in the process. It was found that this may be achieved by adding at least one base to the organic phase after carrying out the previously described process steps. Hence, it is preferred that treating the aqueous composition in step (i) of the process according to the present disclosure comprises an additional step of adding at least one base to the organic phase in order to regenerate the at least one alkylamine. Carrying out this additional step has the advantage that the at least one alkylamine is regenerated from its protonated form and can be recollected and/or recycled into the processes as described herein. This regeneration of the at least one alkylamine is carried out continuously. It is further preferred that the regenerated at least one alkylamine is recycled into use in step (i) of the process as described herein. Adding a base and recollecting the regenerated alkylamine may be carried out by common means known to the skilled person. With regard to the base, it is preferred that the at least one base is selected from KOH, NH₄OH, NaOH, and any combinations and mixtures thereof. These bases provide favourable results, dissolve readily in aqueous media, and are commercially available in any given amounts at reasonable prices.

It is preferred that the ratio of base to the alkylamine is at least 1 : 1, preferably higher than 2 : 1. In other words, it is preferred that the pH of the aqueous phase is higher than 7, preferably higher than 8. This regeneration step may allow to reuse the alkylamine and/or the solvent. Fluorinated acidic compounds, e.g. fluorinated emulsifiers, can be recovered/recycled from the basic, aqueous phase.

With the methods according to the present disclosure, fluoroorganic acidic compounds can be removed by treatment with an alkylamine from the aqueous media. These fluoroorganic acidic compounds can act as stabilizing agent for fluoropolymer particles. Once they get removed by the alkylamine in the method as described herein, the polymer particles will agglomerate or coagulate and can be removed by filtration or sedimentation. Depending on the polymer, the agglomerated or coagulated polymer particles may be in the aqueous and/or organic phase or even between the two phases. Therefore, it becomes possible to filter the whole 2-phase-mixture prior phase separation, or to separate the polymer particles individually from the separated phases. With the method according to the present disclosure, coagulating high solid latices (with solid contents up to 50 wt.-%) and simultaneously removing fluoroorganic acidic compounds from the aqueous phase becomes possible.

In addition to or alternatively to treatment with the at least one alkylamine, the aqueous composition in step (i) may be treated with at least one flocculant. The term "flocculant" has the common meaning in the art and describes a compound or a mixture of compounds which facilitates flocculation of solids. In the present case, flocculation of the fluoropolymer particles contained in the aqueous composition such as an industrial wastewater stream or process stream is desirable since this would facilitate removal of these particles by means of filtration and the like. Preferably, the at least one flocculant is selected from metal oxides, metal sulfates, metal chlorides, optionally in polymeric compounds, as nanoparticles and/or on polymeric carriers, preferably alum or aluminium chloride nanoparticles on polymeric carriers and/or polymeric flocculants such as polyamides, e.g. polyacrylamide.

Exemplary flocculants which may be advantageously used in the process as described herein are VTA Combiflock ^{®} HB 52-65 and VTA LD 260 as commercially available from VTA Austria GmbH. It is preferred that treatment with at least one flocculant is carried out at a pH value in the range of from 5.5 to 11, preferably from 6 to 10, more preferably from 6.5 to 9.5. Keeping the pH value in these ranges may give rise to good flocculation of the fluoropolymer particles in the aqueous composition and facilitate a desirable easy separation of the particles from the aqueous composition in a subsequent step.

Alternatively, electrocoagulation may be used to reduce the polymer particles. For instance, at the anode metal ions (e.g. Fe(II); Al(III)) are released and on the cathode hydroxy ions are generated. The metal hydroxides obtained thereby may then coagulate the polymer. As a further alternative, to the above-mentioned systems, polyamides, organochlorosilanes, hybridsilicagels may be used as flocculants (see, for example, Environmental Science and Pollution Research 27 (2020) 10888-10898; Water 13, (2021) 675). The flocculants are removing polymer particles only and introducing additional ingredients which have to be removed in the next steps. Preferably, no surfactants are added during flocculation.

In addition to or alternatively to the treatment with the at least one alkylamine and/or the at least one flocculant, the aqueous composition in step (i) may be treated with at least one anion exchange resin. This treatment will at least reduce the amount of acidic fluoroorganic compounds in the aqueous composition. Additionally, since anion exchange resin is removing e.g. emulsifiers, polymer particles become instable and will coagulate. The amount of surfactants e.g. non-ionic surfactants like Genapol, Tergitol etc should be at lowest level, e.g. less than 0.01 wt.-%, preferably less than 0.001 wt.-%, even more preferably less than 0.0001 wt.-%, based on the total amount of the aqueous composition. It is also possible to essentially remove the acidic fluoroorganic compounds from the aqueous composition. It is preferred that the anion exchange resin is selected from phenolic ion exchange resins, styrene copolymer ion exchange resins such as styrene-divinylbenzene ion exchange resins, preferably containing tertiary amines or quarternary ammonium, phosphonium, pyridinium, or imidazolium groups. Ion exchange resins are known and well established in the art *per se.* Such ion exchange resins may include an insoluble matrix, substrate or support structure. For instance, the support structure may be in the form of small spherical beads having an average diameter ranging from about 1 mm to about 2 mm. Also, the support structure may be a polymeric substrate. The surface of the polymeric substrate may include sites that trap and release ions. Furthermore, the ion exchange resins useful in the process according to the present disclosure may be based on one or more polymeric materials which may or may not be crosslinked. The substrates may be based on styrene that has been crosslinked with a cross-linker such as divinyl benzene, for example. Crosslinked polymeric substrates may also be porous, and a crosslinked substrate will tend to be hard and not malleable. Polymeric substrates that are not crosslinked can be softer and more malleable than a crosslinked substrate and can have a gel-like consistency, depending on the material used.

The ion exchange resin can comprise a matrix material in the form of non-spherical particles. The matrix can comprise a material that is more amorphous or gel-like such as silica gel, diatomaceous earth, clay, or the like. Ion exchange resins are available commercially such as those available from Dow Chemical Company under the trade designations DOWEX 1, DOWEX1x8, DOWEX NSR-1, DOWEX PSR-2, and DOWEX PSR-3. A further ion exchange resin is commercially available from Purolite Company of Philadelphia, Pa. under the trade designation "Purolite A530 E." Another commercially available silica-based ion exchange adsorbent is available from SiliCycle of Quebec, Canada under the trade designation "SiliCycle TBA Chloride." Further exemplary ion exchange resins useful in the process as described herein are Amberjet^{™} 4200CI and Amberlite^{™} HPR4200 CI which are commercially available from Lenntech, Netherlands. The preferred anion exchange resins are based on trialkyl- or quarternary amine/ammonium groups. For basic aqueous compositions basic (quaternary Ammonium groups) anion exchange resins are preferably used to recover acidic fluorinated compounds and to cause coagulation of polymer particles. Since most aqueous compositions after polymerization are having a pH of less than 7, weakly basic anion exchange resins based on secondary alkylamines or trialkylamin groups are preferred.

Methods involving ion exchange resins, in particular anion exchange resins for the removal of fluoroorganic compounds from aqueous compositions are also known in the art. For instance, US 2010/084343 A1 and US 2017/297926 A1 both disclose methods comprising ion exchange resins immobilized in a vessel through which the water streams are passed. In the process as disclosed herein, the water stream after step (i) will be further treated in step (ii) or in a directly subsequent step (iii), after which it may be looped back into an industrial process. Furthermore, US 2010/084343 A1 discloses removal of fluorinated compounds from water by using ion exchange resin comprising quaternary amines, while US 4,369,266 B1 discloses collecting the fluorinated compounds using an anion exchanger and concentrating them using reverse osmosis to recycle them back into the process. A further method is disclosed in WO 2012/088258 A1.

For instance, in step (i) an aqueous composition comprising fluoropolymer particles and a mixture of fluoroorganic compounds comprising emulsifiers and acidic compounds is first treated with at least one alkylamine. This may remove at least a major part of the emulsifiers and acidic compounds which leads to coagulation of the fluoropolymer particles. It can become necessary to add flocculants if coagulation of the particles is considered insufficient for an efficient removal by e.g. filtration. The same may be true if coagulation of the particles was induced by treatment with ion exchange resin instead of treatment with at least one alkylamine in step (i) as described above. That is, addition of flocculant may be considered necessary if coagulation after addition of ion exchange resin is considered insufficient for an efficient removal of the particles such as by means of filtration.

In addition to or as an alternative to treatment with alkylamines, flocculants and ion exchanger which already may induce coagulation of the polymer particles, coagulation and partial separation of the polymer particles may also be induced by applying high shear rates. Accordingly, larger agglomerates of primary polymer particles are formed, which are less stable that the primary particles and can be removed, for example by means of filtration and the like in a subsequent step.

Step (ii) of the process according to the present disclosure consists of removing of at least part of the fluoropolymer particles from the aqueous composition. Removal of the fluoropolymer particles from the aqueous composition may be effectuated by the common means in the art. Preferably, removal of the fluoropolymer particles in step (ii) is carried out by means of filtration, centrifugation, cyclons, adsorption, and any combinations thereof. Step (ii) may be carried out as a subsequent step to step (i) as described above. Alternatively, removal of at least part of the fluoropolymer particles may be carried out first, before subsequently carrying out step (iii). In this regard, it is preferred that removal of the fluoropolymer particles in step (ii) is carried out by means of filtration, preferably ultrafiltration. The aqueous composition may be treated in step (ii) or in an additional step after step (ii) with an ultrafiltration technology or alternatively the initial aqueous compositions directly by an ultrafiltration step. The polymer particle content for such ultrafiltration-treatments is preferred to be less than 0.3 wt.-%, preferably less than 0.28 wt.-%, more preferably less than 0.25 wt.-% based on the total weight of the aqueous composition. At higher polymer particle contents, fouling and/or scaling and/or a plugging of the UF membranes may occur. It may be beneficial to add prior to this ultrafiltration-step stabilizers such as non-ionic surfactants (e.g. Genapol, Tergitols, etc.) at very low amounts. For example, amounts of non-ionic surfactants of less than 0.1 wt.-%, preferably less than 0.05 wt.-%, preferably less than 0.02 wt.-% and even more preferably less than 0.01 wt.-% based on total amount of the composition. This may help avoid plugging of the membranes. It might be also advantageously to avoid the addition of stabilizers and clean, rinse or purge the membrane after plugging occurs. Ceramic membranes are preferred in this regard, since even irreversibly plugged membranes may be purged from particles by pyrolization. Running ultrafiltration at feeds with higher solid content may lead to at least a certain degree of blocking or plugging of the membrane, which could give rise to an undesirable drop of flow rate and/or a similarly undesired increase in pressure in the membrane system.

For example, the operation or process parameters of the ultrafiltration step may include a temperature in the range of from 20 to 50°C or from 20 to 25 °C. That is, ambient temperatures are sufficient for the ultrafiltration as described herein. As a method for feeding the polymer particle containing process water to the ultrafiltration membrane, there are a dead-end filtration method for feeding the aqueous composition or water stream perpendicular to the membrane and a cross-flow filtration method (tangential flow filtration (TFF)) for feeding the polymer particle containing process water in parallel with the membrane. The cross-flow ultrafiltration is particularly preferred from the point that clogging of pores of the membrane hardly occurs and the feeding of the process water can be carried out at relatively low pressure. The filtration pressure is represented by an average pressure of an inlet pressure of the membrane (hereinafter also referred to as "Pin") and an outlet pressure of the membrane (hereinafter also referred to as "Pout"). The average filtration pressure may be, in case of the tangential flow filtration (TFF) or cross-flow filtration method, from 0.01 MPa to 1 MPa, preferably from 0.1 MPa to 0.5 MPa. Alternatively, the pressure build-up produced at the inlet of the membranes or membrane packages with the aid of the pumps may be between about 1.0 and 10.0 bar, depending on the delivery capacity and the tube cross-section. The operating temperature in the ultrafiltration circulation as described herein can be chosen within fairly wide limits, in fact between 5 and 90 °C, but the ultrafiltration is preferably carried out at somewhat elevated temperatures, that is to say between 20 and 85 °C. and in particular between 20 and 60 °C., whereupon the rate of the process can be increased. The filtration pressure may be restricted by the circulation flow rate of the process water (in other words, when the circulation flow rate is increased, the filtration pressure has to be set at a low pressure). When the feeding flow rate of the aqueous composition or water stream is set by the differential pressure of the closed vessels, the filtration pressure is not affected by the feeding flow rate of the process water and can be set freely. Means which do not substantially give a shearing force to the aqueous composition or water stream, for example, means for applying a pressure to the composition or water stream with clean air or inert gas can be employed. Examples of the inert gas are nitrogen gas and the like. From the viewpoint of cost, clean air is preferable. In case where pressure is applied with the compressed air, a pressure to be applied may be determined so that the filtration pressure becomes an average pressure of the above-mentioned inlet pressure and outlet pressure of the membrane. The flow rate of process water may vary depending on kind and pore size of the ultrafiltration membrane and the aqueous composition or water stream feeding method. Usually, it may be preferable to set a linear velocity at 0.5 to 16 m/sec, more preferably 1 to 7 m/sec in the tangential flow filtration (TFF) or cross-flow filtration. The flow rate of the aqueous composition or water stream may also be set by a differential pressure of the feeding vessel of the aqueous composition or water stream and the receiving side vessel.

Similarly, it is preferred that ultrafiltration is carried out in a cross-flow arrangement. A cross-flow arrangement of membranes or modules of membranes is also advantageous from the point of view of avoidance of blocking or plugging of the membranes, and further advantageous with regard to continuous flow and effective filtration and consequential removal of the fluoropolymer particles. Furthermore, ultrafiltration may be carried out by means of membranes selected from polymeric and ceramic membranes, preferably from ceramic membranes. Ceramic membranes are preferred since they were found to be more chemically stable and also more resistant towards higher pressure and loads as experienced in higher through-put arrangements. Furthermore, it was found that for an effective and efficient of removal of the fluoropolymer particles, the ultrafiltration membranes should exhibit a certain molecular weight cut-off (MWCO). In particular, it was found that cut-offs of lower than 150 kDa gave good results, and lower than 120 kDa and lower than 100 kDa gave even improved results. Hence, for carrying out step (ii) of the process as described herein, it is preferred that the membranes exhibit a cut-off of less than 150 kDa, preferably less than 120 kDa, more preferably less than 100 kDa. In this regard, it is preferred that the membranes exhibit a cut-off in the range of from 10 kDa to 110 kDa, preferably from 15 to 100 kDa, more preferably from 20 to 90 kDa, even more preferably from 50 to 80 kDa.

If removal of the fluoropolymer particles in step (ii) is considered not complete and/or insufficient, the filtrate e.g. the ultrafiltration may be looped back into the feed of the ultrafiltration module. Also, an additional step of ultrafiltration may be carried out in order to remove remaining fluoropolymer particles from the aqueous composition, which is, at this point of the process as described herein, the filtrate of the ultrafiltration of step (ii). In this regard, employing membranes having a lower cut-off (MWCO) than the membranes in the initial ultrafiltration step may be advantageous. Apart from that, the above description for ultrafiltration also applies to the additional ultrafiltration step.

After step (ii), it may be desirable to remove cations from the aqueous composition as described herein. A removal of cations may be beneficial when reusing or re-looping the purified aqueous composition, e.g. a water stream, into an industrial process. Thus, it is preferred that after step (ii), the aqueous composition is treated with a cation exchange resin to remove ions, preferably cations, more preferably inorganic cations from the aqueous composition. The cations may be selected from alkali metals, alkaline earth metals, transition metals such as manganese, iron, chromium, aluminium and nickel, and rare-earth metals, and any combinations and mixtures thereof. At this point, it may be advantageous that the aqueous composition is treated with adsorbents such that the content of organic hydrocarbon compounds in the aqueous composition is reduced.

Useful cation exchange resins include polymers (typically cross-linked) that have a plurality of pendant anionic or acidic groups such as, for example, polysulfonates or polysulfonic acids, polycarboxylates or polycarboxylic acids. Examples of useful sulfonic acid cation exchange resins include sulfonated styrene-divinylbenzene copolymers, sulfonated crosslinked styrene polymers, phenol-formaldehyde-sulfonic acid resins, and benzene-formaldehyde-sulfonic acid resins. Preferably, the cation exchange resin is an organic acid cation exchange resin, such as carboxylic/sulfonic acid cation exchange resin. Cation exchange resins are available commercially from a variety of sources. Cation exchange resins are commonly supplied commercially in either their acid or their sodium form. If the cation exchange resin is not in the acid form (i.e., protonated form) it may be at least partially or fully converted to the acid form in order to avoid the generally undesired introduction of other cations into the dispersion. This conversion to the acid form may be accomplished by means well known in the art, for example by treatment with any adequately strong acid (e.g. HCI, H₂SO₄ and HNO₃). The ion-exchange process may be carried out in a batch process, or in a continuous mode using fixed bed columns, for example a column with a length to diameter ratio of 20 : 1 to 7 : 1 at a flow rate of 1 bed volume/hour. The process can be monitored on-line or off-line by pH-meter, metal-analyzer (for example if the hydrolyzation is carried out using Li-salts, the lithium content can be measured) or other techniques (e.g. conductivity etc.). The ion-exchange resin can be a multimodal or a monomodal resin and it can have a broad or narrow particle size distribution. Commercially available cation exchange resins include but are not limited to those available under the trade designation LEWATIT MONO PLUS S 100, AMBERLITE IR-120(Plus) or PUROLITE 150C TLH.

Preferably, the content of the fluoropolymer particles in the aqueous composition after step (ii) the process according to any one of the preceding claims is less than 100 ppm, preferably less than 10 ppm, more preferably less than 5 ppm. If considered necessary after step (ii), the aqueous composition may be further treated with active carbon, preferably granulated active carbon or powdered active carbon, silica gel and/or activated alumina, thereby removing organic compounds such as organic solvents or alkylamines. That is, the aqueous water composition, in particular a water stream, may be passed through a vessel containing active carbon, preferably granulated active carbon or powdered active carbon, silica gel and/or activated alumina, wherein remaining organic compounds such as organic solvents and/or alkylamines which may still be present are removed, before the aqueous composition (i.e. the water stream) is passed into the treatment of step (iii) of the process as described herein.

Step (iii) of the process according to the present disclosure is treating the aqueous composition with at least one semi-permeable membrane in order to remove fluoroorganic compounds, remaining polymer particles, ions and all hydrocarbon materials. At this point of the process, there may be already only traces of fluoroorganic compounds present or detectable in the aqueous composition, e.g. the water stream obtained after the previous steps described herein. In this regard, it is preferred that treatment of the aqueous composition with at least one semi-permeable membrane in step (iii) comprises passing the aqueous composition through at least one ultrafiltration membrane and/or treating the aqueous composition with at least one reverse osmosis membrane. Preferably, the aqueous composition is treated with at least one reverse osmosis device. Reverse-osmosis devices for purification of water streams are well-established even on large scale or industrial levels.

For instance, the aqueous filtrate of the ultrafiltration step may be fed to a reverse osmosis operation for the purpose of concentration and recycling into the process. This reverse osmosis apparatus can be operated in a manner which is in itself known. The pressure, produced by a pump, in front of the membrane may be in the range from 10 to 80 bars, preferably from 10 to 70 bars. The reverse osmosis can be carried out in a temperature range from 10 °C to 80 °C, preferably from 20 °C to 50 °C. Some kinds of the membranes may limit the feasible pH range of the solution. Generally, reverse osmosis as described herein may be carried out in a pH range from 2 to 11, preferably from 5 to 11, and more preferably from 7 to 9. In principle, all asymmetric membranes with a retention capacity towards dissolved substances, i.e. a separation limit below the molecular weight of the stabilizing emulsifier employed, are suitable for concentrating the stabilizing emulsifier by the reverse osmosis process. Those types of membrane which can also be used in the ultrafiltration, in particular membranes of cellulose acetate, polyamide and polysulfone, are also suitable with regard to their material composition. The membranes are also usually collected together to form units (modules) in the case of the reverse osmosis, and flat membranes, if appropriate hollow-fibre membranes, and, preferably, tube membranes (hose membranes) are also used, but their design and position in the apparatus are more resistant to pressure than is necessary in the case of the ultrafiltration process as described herein.

This provides a purified water stream essentially free from hydrocarbons, fluoroorganic compounds, fluoroorganic particles, and optionally free from cations such as metal or heavy metal cations. For instance, the total organic fluorine components content (TOF) in the aqueous composition after carrying out the process according to any one of the preceding claims may be lower than 1 ppm, preferably lower than 0.5 ppm, and more preferably lower than 0.2 ppm. The total organic fluoride components comprise fluorinated organic polymeric particles, inert fluorinated compounds, fluorinated organic compounds, fluorinated organic acids, fluorinated organic anions, emulsifiers, and the like. Similarly, the total organic fluorine content in the aqueous composition after carrying out the process according to the present disclosure is less than 1 ppm, preferably less than 0.5 ppm, more preferably less than 0.1 ppm. The total organic carbon (TOC) of the purified water obtained after (iii) may be lower than 50 ppm, preferably less than 20 ppm, preferably less than 10 ppm or even more preferably less than 1ppm.

Apart from the purified water stream, the reverse osmosis in step (iii) as described herein yields fluoroorganic compounds separated from the water. As described, these compounds may either be recycled into the industrial process, collected for recycling into other processes, collected for disposal, or collected for further treatment. In this regard, the extracted/recovered compounds are selected from alkylamines, anion exchange resins, flocculants, emulsifiers, non-fluorinated materials selected from organic solvents and doping materials, and any combinations and mixtures therefrom.

The fluoroorganic materials separated during the various process steps may contain valuable compounds e.g. emulsifiers, monomers (vinyl/allylethers), adjuvants etc. These materials can be recovered by distillation and other well-known methods. At the end only non-usable materials remains, which are treated as described below.

In some cases, the fluoroorganic compounds separated from the water and collected during steps (i) to (iii) the valuable materials are isolated and reused, undesired materials are disposed or degraded. Accordingly, it is preferred that in a further step after step (iii), the undesired fluoroorganic compounds after separation of the valuable materials, are contacted with a radical-forming process to degrade low-molecular weight fluoroorganic compounds into carbon dioxide, water, fluoride ions, and optionally cations. The radical-forming process may be an electrochemical process, preferably comprising a hydroxy-radical generating electrode. In this regard, it is preferred that the hydroxy-generating electrode is selected from a boron doped diamond coated electrode, a lead oxide electrode, or a diamond particle electrode doped with boron. The boron of the boron doped diamond coated electrode may be doped at 0.05 ppm to 10000 ppm. The potential used in the electrochemical process may be in the range of from 3 to 15 Volts. Preferably, the fluoroorganic compounds undergoing this treatment are present in an aqueous phase. In the present disclosure, the radical-forming process refers to a process which generates radicals, specifically hydroxy radicals. Such a process for generating radicals is the electrochemical generation of radicals, which react with the fluorinated compounds resulting in the constituent species of water, carbon dioxide and fluorine ions, among others. The electrochemical generation of radicals is accomplished using specific electrodes, such as doped diamond coated electrodes, doped diamond particle electrodes, lead oxide electrodes, or combinations thereof. Typically, these electrodes comprise a metal (such as Nb, Ti, Zr, and/or Ta), graphite, and/or ceramic base material (such as SiC and/or SiN with sufficient conductivity), which is coated with a doped diamond. Usually, these electrodes are coated by chemical vapour deposition and are sometimes referred to as (thin) layer diamond-electrodes.

The resistivity of the doped diamond layer may be between 0.001 to 10 Ω cm (Ohm centimeters). By doping diamond with boron, phosphorous, nitrogen, and/or sulphur the diamond becomes semiconductive. Preferably, boron or nitrogen is used to dope the diamond coated electrode. The content of boron may be between about 0.05 ppm (parts per million) to 10000 ppm, preferably between about 0.1 ppm to 100 ppm. The content of nitrogen may be between about 5 ppm to 100 ppm.

Exemplary boron doped diamond coated electrodes are commercially available from: Adamont Technologies SA, La-Chaux-deFonds (CH), Condias GmbH, Itzehoe (Germany), DiaCCon GmbH, Erlangen (Germany), Element Six Ltd. (GB), and Pro Aqua GmbH, Niklasdorf (Austria). The electrodes of the present disclosure are able to produce hydroxyl radicals (instead of H₂ + O₂). Such electrodes are also called "high oxygen overvoltage anodes". It is believed that the hydroxyl radicals react with the fluoroorganic compounds, causing decomposition. The electrochemical cell can be assembled as in known in the art. The doped diamond electrode or lead oxide electrode may be the anode or the cathode, but is typically the anode.

The electrochemical process is preferably operated under continuous conditions. Usually, the aqueous phase is run through a pair of electrodes (preferably the anode is the anode oxidation place). In one embodiment, more than one electrode pair is used in an electrochemical cell. The cell can be monopolar or bipolar, with or without a diaphragm. In one embodiment, ion selective membranes may be used. Exemplary cell designs are described in detail in U.S. Pat. No. 6,315,886. The voltage during the radical forming process may be at least 2, 3, 3.5 or even 4 volts and no more than 8, 10, 15 or even 20 volts. It is believed that the current density is not critical, however, usual current densities are at least 0.5, 1 or even 2 A/dm² (Amps per decimeter squared) and at least 6, 8, or even 10 A/dm². The temperature during the radical forming process is between 5°C to 95°C, and preferably at least 30°C. In order to achieve satisfactory current, the conductivity of the aqueous solutions to be contacted with the radical forming process should be at least 200 µS/cm, preferably at least 500 µS/cm. Anions such as sulfate anions (SO₄²⁻) which are either present in, or added to, the aqueous solutions to be contacted with the radical forming process may enhance the conductivity of the solution. Typical amounts of the sulphate ion are at least 0.01, 0.05, 0.1, 1, or even 5 g/L; at most 50, 100, 150, or even 200 g/L. The aqueous solutions may be diluted and/or anions added to assist in the electrolyzation process to remove low molecular weight fluoroorganic compounds. For example, if the aqueous solutions comprise polymer particles, these solutions may be more difficult to electrolyze due to a reduction in the electrical conductivity, which can make the removal of low molecular weight species by electrolysis difficult. Diluting the aqueous solutions and/or adding anions (such as sulphate) to the aqueous solutions may improve the electrical conductivity and achieve more efficient removal of the of low molecular weight fluoroorganic compounds.

Further methods of further treatment of either or both of fluoroorganic compounds and fluoropolymer particles separated from the water stream include: incineration which yields fluoride (in form of HF) and carbon dioxide (CO2) and which is not desirable nowadays under the aspect of CO2-reduction. Consequently, other methods to cope with the non-usable materials are preferred: pyrolysis in particular if there are higher amounts of polymers present will convert the materials into monomers. The pyrolysis can be done in a fluidized bed reactor as described in WO2010/039820 or in an agitated bed reactor as described in WO2021/165923. Gasification of the fluorine containing residuals in presence of low oxygen contents and/or water at temperature of 800-1500°C is yielding carbon monoxide and hydrogen (Syngas), HF and carbon (no CO2 is emitted). All three alternatives (pyrolysis, electrochemical oxidation and gasification) to handle the non-usable fluorinated materials are avoiding CO2 emissions and generating monomers or at least the valuable HF. This may have the advantage that essentially all of the fluorine involved may be recovered and be reused again. This basically means the fluorine cycle is closed. Accordingly, the process according to the present disclosure preferably comprises an additional step in which the extracted compounds and/or the separated fluoropolymer particles are further processed by incineration, pyrolysis, gasification, and/or electrochemical oxidation such that fluoride, fluorinated monomers, syngas, hydrogen fluoride and/or carbon are generated.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Gas Chromatography Analysis

1 mL of the aqueous sample and 0.6 mL of BF₃/MeOH-complex solution (20%, obtained from Merck) are filled in 10 mL head-space vial and immediately closed. After shaking, the vial is heated to 70 °C for 30 min using the autosampler unit of the headspace GC-instrument and afterwards analyzed by headspace-GC-FID with external calibration.

| | |
|---|---|
| Instrument: | Agilent 6890 N |
| Column: | Rtx-20, Trifluoropropylmethylpolysiloxane, 0.32 mm × 105 m, 1.5 µm |
| Injection: | 1.500 µL |
| Temperature: | 50 °C (5 min) - 5 °C/min to 200 °C |
| Flow rate: | 3.5 ml/min |

### Liquid Chromatography - mass spectrometry(LC-MS):

The submitted samples were dissolved in methanol prior to analysis. Standard solutions were prepared from an aqueous solution of ADONA that was determined to have a concentration of 28.36% by NMR.

| | |
|---|---|
| Instrument: | Agilent 6470 Triple Quad LCMS MAID 1665 |
| Column: | Zorbax Bonus RP, 4.6 x 75 mm, 3.5 µm |
| Solvent A: | Water with 6 mM ammonium acetate |
| Solvent B: | Methanol with 6 mM ammonium acetate |
| Gradient: | 75 % B to 100% B at 4 minutes |
| Injection: | 2 µL |
| Col. Temp: | 40 °C |
| Flow Rate: | 0.5 mL/min |
| MS: | Negative electrospray |

### Gravimetric solid content measurement:

An aluminium bowl is placed on the thermal scale in a moisture determination instrument (Sartorius MA35), 20 to 30 g aqueous solution are filled in and dried at 160 °C. The dry solid content is measured by gravimetric determination of the aluminium bowl before and after thermal treatment.

### Dynamic Light Scattering (DLS):

The particle size distribution is determined by dynamic light scattering using standard operating procedure according to ISO 13321. 3 mL of aqueous sample are used to measure the particle size distribution. Two measurements of 10 - 14 runs per measurement are automatically determined and results are displayed in nm.

| | |
|---|---|
| Instrument: | Zetasizer Nano S |
| PCS Software: | Fa. Malvern PCS Vers. 7 |
| Scattering angle: | 173° |
| Laser: | 5 mW He-Ne Laser |
| Wavelength: | 633 nm |
| Dimensions cuvette: | 10x10x45 mm |

### Total organic fluorine measurement (TOF):

The total organic fluorine content (TOF) is determined as the difference of the total fluorine content (TF) and the inorganic fluorine content (IOF); TOF = TF - IOF. The measurements were conducted at the DVGW-Technologiezentrum Wasser TZW in D-76139 Karlsruhe.

The measurement system is an ion-chromatography device connected to a combustion unit and adsorption unit. The aqueous samples are incinerated together with 60 mg activated carbon. Calibration is done with high purity water and PFBS (perfluorobutane sulfonic acid). This provides the TF-values. IOF is determined by ion-chromatography and conductivity detection according to DIN EN ISO 10304-1.

**Materials used:**

| | |
|---|---|
| TOA/Trioctylamine | Trioctylamine (99.7% purity), commercially available from Sigma Aldrich, Germany |
| ALAMINE 336 | Tri(C₈/C₁₀) amine available commercially from Cognis, Monheim, Germany. |
| PFAA / C₂-acid | CF₃COOH (97% purity), obtained from Sigma Aldrich, Germany |
| PFPA / C₃-acid | CF₃CF₂COOH (97% purity), obtained from Sigma Aldrich, Germany |
| Mesitylene | Trimethylbenzene (98% purity), obtained from Sigma Aldrich, Germany |
| Genapol X089 | (>90% purity), Obtained from Clariant, Germany |
| ADONA | Available from Anles, St. Petersburg, Russia |
| THV waterstream | Terpolymer from TFE, HFP, VDF (melting point 120 - 160 °C) in water containing ADONA-emulsifier |
| Amberjet^{™} 4200CI | Strong basic resin, Obtained from Lenntech, The Netherlands |
| Amberlite^{™} HPR4200 CI | Strong basic resin, Obtained from Lenntech, The Netherlands |
| Liqui-Flux^{®} W06-08N | Polyethersulfone (PES) hollow fiber UF-membrane (100 - 150 kDa), obtained from Membrana (3M), Wuppertal, Germany |
| T-CUT UF 100-250 040-0750 PVC | Polyethersulfone (PES) tubular UF-membrane (100 kDa), obtained from CUT Membrane Technology GmbH, Germany |
| 10 mm INSIDE CéRAM^{™} membranes | ceramic membranes, obtained from TAMI Industries, France |
| FILMTEC^{™} BW30-2540 | Spiral-wound element with polyamide thin-film composite RO-membrane, obtained from Dupont |
| VTA Combiflock ^{®} HB 52-65 | Obtained from VTA Austria GmbH |
| VTA LD 260 | Obtained from VTA Austria GmbH |
| Activated Aluminium Oxide Basic (non-fibrous) | Obtained from Dynamic Adsorbents, Inc.(USA) |
| Granular Activated Carbon | Obtained from Carbot Corporation (USA) |
| Amorphous Silica Gel (SiO2) | Obtained from Multisorb Filtration Group (USA) |

### Example 1 and Comparative Example 1

Waterstreams with solid contents of 0.12 w% (Ex. 1) /0.33 w% (Comp. Ex. 1) (containing fluoropolymer particles from PFA, THV, PTFE-polymerizations with a particle size distribution determined by light scattering from 30 - 300 nm), 2.1 ppm (Ex. 1) /1.5 ppm (Comp. Ex. 1) ADONA and 0.02 w% (based on the total amount of water) of non-ionic surfactant Genapol X 080 were used for the trials (Ex 1 & Comp. Ex. 1) s. table 1).

The water was treated in a Ultrafiltration (UF) device equipped with hollow fiber PES-membrane (MWCO 100 - 150 kDa, membrane area 10 m²) in a dead-end mode at 20 °C to reduce the polymer particle content. The UF/RO-parameters and results are provided in table 1.

**Table 1: Set parameters and results after treatment using UF.**

| Trial | Ex. 1 | Comp. Ex. 1 |
|---|---|---|
| UF-Feed flow rate [I/h] | 285 | 400 |
| UF-Filtrate flow rate [I/h] | 206 | 345 |
| Transmembrane pressure UF (TMP) [bar] | 0.35 | Increase from 0.3 bar to 1.8 bar/plugging |
| Trial time | 168 h | 35 h |
| Solid content (UF-Feed) [w%] | 0.12 | 0.33 |
| Solid content (UF-Filtrate) [w%] | 0.11 | 0.13 |
| ADONA conc. (UF-Feed) [ppm] | 2.1 | 1.5 |
| TOF feed ultrafiltration [ppm] | 109 | 1380 |
| TOF filtrate ultrafiltration [ppm] | 16.3 | 4.6 |

The results show high TOF-reduction after UF step even though the solid content is rather small (trial Ex. 1). With higher solid contents (Comp. Ex. 1), irreversible plugging of the hollow fiber membrane happens quite fast (after 35 h).

The UF filtrates of Ex. 1 and Comp. Ex. 1 were passed through 2 in series connected spiral-wound polyamide thin-film composite reverse osmosis (RO) membrane elements (99.5 % stabilized salt rejection, membrane area 5.2 m²). The RO-parameters and results are provided in table 2.

**Table 2: Set parameters and results after treatment using RO.**

| Trial | UF filtrate of Ex. 1 | UF filtrate of Comp. Ex. |
|---|---|---|
| RO-Feed flow rate [I/h] | 555 | 380 |
| RO-Permeate flow rate [I/h] | 80 | 30 |
| Input / Output pressure (RO [bar] | 12.5/12 | 15/14.5 |
| Trial time | 168 h | 35 h |
| Solid content (RO-Feed) [w%] | 0.11 | 0.13 |
| ADONA conc. (RO-Feed) [ppm] | 2.1 | 1.5 |
| ADONA conc. (RO-Permeate) [ppm] | 0.069 | 0.009 |
| ADONA reduction [%] | 97 | 99 |
| TOF RO-Feed [ppm] | 16.3 | 4.6 |
| TOF RO permeate [ppm] | 0.5 | < 0.2 |

The RO-unit is reducing fluoroorganics and ADONA to very low levels.

### Example 2

1.7 kg of a similar water stream as in Example 1 with pH 1.6 containing a 0.12 w% solid content and 400 ppm ADONA was extracted with 0.41 kg mesitylene and 0.02 kg trioctylamine to remove the lion-share of emulsifier and acids. A white intermediate phase forms between the aqueous and organic phase. After filtration of the aqueous phase the solid content is reduced to 0.08 w% and ADONA conc. to 0.73 ppm. The particle size distribution of polymer particles is significantly increased to > 2300 nm.

After solid separation the purified water is treated by RO to further purify the water. The ADONA conc. can be reduced to low ppb-level after treatment with RO incl. traces of mesitylene/trioctylamine and ions.

### Reference Example 1

To remove the traces of mesitylene in an aqueous phase after extraction (mesitylene/trioctylamine) various adsorbents were investigated e.g. by putting the adsorbent material into the water, and agitating for 8 h and filtering off the adsorbent. The results are listed in table 3.

**Table 3: Results from NMR analysis (n.d. means non detectable).**

| Adsorbant | Adsorbent concentration | Concentration of mesitylene after treatment | Concentration of mesitylene prior treatment |
|---|---|---|---|
| Silicagel | 0.1 % | 0.00002 w% | 0.00063 w% |
| Activated carbon | 0.2 % | n.d. | 0.00063 w% |
| Alumina | 0.2% | n.d. | 0.00063 w% |

The results demonstrate that the traces of mesitylene can be further reduced or eliminated; such water quality can be reused. Alternatively, the adsorbents can be put into a column and the aqueous phase is running through the column.

### Example 3

0.5 kg of a THV-containing water stream (pH 2) containing 1.1 w% polymer particles (size distribution 40 - 300 nm) and 53 ppm ADONA was extracted with 0.41 kg Mesitylene and 0.02 kg trioctylamine to remove the lion-share of the emulsifier. A white intermediate phase forms between the aqueous and organic phase. After filtration of the aqueous phase the solid content is reduced to 0.008 w% and ADONA conc. to <1 ppm. In a further purification step, the aqueous phase is treated by RO. The concentration of ADONA was reduced to low ppb-level after treatment with RO; no plugging of the RO-membrane was observed.

### Example 4

To 0.5 kg of the same THV-water as in example3, but at pH 6, 0.022 kg of an ion-exchange (IT) resin (Amberlite HPR 4200 CI) was added. After stirring the mixture for 1 h composition was filtered. The solid content / ADONA concentration in the aqueous phase was reduced to 0.02 w% / <1 ppm in a further purification step, the aqueous phase was treated by RO.

### Example 5

A wastewater similar to the one from Ex. 1 was charged under stirring with an aqueous polyaluminium chloride solution (40 w%, 1 L/m³ (trial 1, for 1 m³ wastewater, 1 L of VTA Combiflock ^{R} HB52 is used) and 2.3 L/m³ (trial 2)), e.g. VTA Combiflock^{R} HB 52-65 under formation of micro flakes. To this suspension a diluted cationic polymer solution (0,2 % cationic polymer, 20 L/m³), e. g. VTA LD 260 was added. Macro flakes were formed immediately, sedimented and were filtered off prior further purification steps. The results of the two trials are listed in table 4.

**Table 4: Results of particle removal by flocculation.**

| | Wastewater | Trial 1 | Trial 2 |
|---|---|---|---|
| Flocculant | - | 1) VTA Combiflock^{R} HB 52 2) VTA LD 260 | 1) VTA Combiflock^{R} HB 52 2) VTA LD 260 |
| pH | 9.2 | 7.4 | 6.8 |
| Particle size [nm] | 40 to 300 | non detectable | non detectable |
| ADONA conc. [ppm] | 530 | 600 | 590 |
| Polymer solid content [w%] | 0.047 | 0.008 | 0.002 |

By using a 2-stage flocculation process a high polymer particle reduction was achieved. An impact on ADONA concentration in wastewater after treatment was not visible (concentration levels before and after treatment are in the same range). This polymer particle reduced water was then treated by RO to eliminate fluoroorganic components, traces of the flocculants and ions.

### Example 6

A similar wastewater as in Ex. 1 was purified by Ultrafiltration and Reverse Osmosis. In the first step, the water was treated at 25 °C by cross flow Ultrafiltration in a helicopter laboratory device using ceramic membranes with different separation limits (MWCO: 1 kDa, 15kDa, 150 kDa, 300 kDa) to reduce the solid content. In the second step, the combined UF Filtrates (15 kDa, 150 kDa and 300 kDa) were purified in a RO flat channel cell by recirculation over 17 h. The investigated set parameters, levels after treatment and reduction results are listed in table 5.

**Table 5: Set parameters and levels after treatment using UF and RO.**

| Filtration type / MWCO | UF 1 kDa | UF 15 kDa | UF 150 kDa | UF 300 kDa | RO |
|---|---|---|---|---|---|
| Feed flow rate [m³/h] | 5.8 | 5.8 | 5.8 | 5.8 | 0.66 |
| Filtrate / Permeate flow rate [I/h] | 0.63 | 1.13 | 6.22 | 8.05 | 0.37 |
| Input / Output pressure [bar] | 3.6/1.5 | 3.6/1.5 | 3.6/1.5 | 3.6/1.5 | 30/28 |
| Overflow rate [m/s] | 16 | 16 | 16 | 16 | 3 |
| Solid content (UF-Feed) [w%] | 0.13 | 0.13 | 0.13 | 0.13 | - |
| Solid content (UF-Filtrate) [w%] | 0.03 | 0.05 | 0.07 | 0.07 | - |
| Reduction Solids [%] | 78 | 63 | 48 | 48 | - |
| ADONA conc. (Feed) [ppm] | 3.4 | 3.4 | 3.4 | 3.4 | 3.4 |
| ADONA conc (Filtrate) [ppm] | 2.3 | 2.6 | 3.3 | 3.4 | 0.18 |
| ADONA Reduction [%] | 32 | 24 | 3 | 0 | 95 |

The results indicate that a more efficient reduction of polymer particle reduction is feasible with low MWCO (e.g. 1 kDa, 15 kDa). After the RO treatment, the ADONA concentration is reduced to a very low level.

## Claims

1. A process for cleaning up aqueous compositions comprising fluoropolymer particles and at least one fluoroorganic compound, the process comprising the following steps
(i) Treating the aqueous composition with at least one alkylamine, at least one anion exchange resin, and/or at least one flocculant; and/or high shear-rates; and/or
(ii) Removing at least part of the fluoropolymer particles from the aqueous composition; and
(iii) Treating the aqueous composition with at least one semi-permeable membrane in order to remove fluoroorganic compounds.

2. The process according to claim 1, wherein removal of the fluoropolymer particles in step (ii) is carried out by means of filtration, centrifugation, cyclons, adsorption, and any combinations thereof, preferably wherein the content of the fluoropolymer particles in the aqueous composition after step (ii) is less than 0.1 wt.-%, preferably less than 100 ppm, preferably less than 10 ppm, more preferably less than 5 ppm.

3. The process according to claim 2, wherein removal of the fluoropolymer particles in step (ii) is carried out by means of filtration, preferably ultrafiltration , wherein ultrafiltration is carried out with a polymer solid content of the aqueous composition in the ultrafiltration feed of less than 0.3 wt.-%, preferably less than 0.28 wt.-%, more preferably less than 0.25 wt.-%, based on the total weight of the aqueous composition, and/or wherein an additional step for removal of the fluoropolymer particles after step (ii) by means of ultrafiltration and/or nanofiltration.

4. The process according to claim 2 or claim 3, wherein ultrafiltration and/or nanofiltration is carried out in a cross-flow arrangement, optionally in presence of non-ionic surfactants.

5. The process according to any one of the preceding claims, wherein the fluoropolymer particles are amorphous or crystalline, preferably consisting of polymers or copolymers comprising TFE, HFP, VDF or ethylene, and any combinations and mixtures thereof.

6. The process according to any one of the preceding claims, wherein in step (iii) the aqueous composition is treated with at least one reverse osmosis device.

7. The process according to any one of the preceding claims, wherein the at least one fluoroorganic compound is selected from acidic and neutral compounds, preferably from acidic fluoroorganic compound.

8. The process according to claim 7, wherein the fluoroorganic acidic compounds are selected from fluoroorganic emulsifiers, preferably from highly fluorinated emulsifiers.

9. The process according to any one of the preceding claims, wherein the at least one alkylamine is a trialkylamine according to formula (I):
NR₁R₂R₃ (I)
wherein R₁, R₂, and R₃ may be the same or different and at least one of R₁, R₂, and R₃ is a linear or branched, saturated or unsaturated carbon group, which optionally, may comprise heteroatoms and where the total number of carbon atoms is greater than 8.

10. The process according to any one of the preceding claims, wherein the anion exchange resin in step (i) is selected from phenolic ion exchange resins, styrene copolymer ion exchange resins such as styrene-divinylbenzene ion exchange resins, preferably containing tertiary amines or quarternary ammonium, phosphonium, pyridinium, or imidazolium groups.

11. The process according to any one of the preceding claims, wherein the at least one flocculant in step (i) is selected from metal oxides, metal sulfates, metal chlorides, optionally provided as polymeric compounds, as nanoparticles and/or on polymeric carriers, preferably alum or aluminium chloride nanoparticles on polymeric carriers, organosilanes, hybridsilicagels and/or polymeric flocculants such as polyamides, preferably polyacrylamide.

12. The process according to any one of the preceding claims, wherein the at least one fluoroorganic compound is present in the aqueous composition before treatment in step (i) in an amount in the range of from 0.1 ppm to 30,000 ppm, preferably from 0.3 to 15,000 ppm, more preferably from 1 to 6000 ppm.

13. The process according to any one of the preceding claims, wherein the aqueous composition introduced into step (i) is an industrial wastewater stream or a process water stream of an industrial process, preferably wherein the process is a continuous process, and wherein the cleaned water stream obtained after the process according to any one of the preceding claims is reintroduced into the industrial process.

14. The process according to claim 13, wherein step (i) and/or step (ii) yield an organic phase, wherein step (iii) yields a concentrate, and wherein the organic phase and/or the concentrate are extracted and/or recovered, and wherein the extracted compounds are resupplied into the process and/or the industrial process.

15. The process according to any one of the preceding claims, wherein the total organic fluoride components content (TOF) in the aqueous composition after carrying out the process according to any one of the preceding claims is lower than 1 ppm, preferably lower than 0.5 ppm, and more preferably lower than 0.2 ppm, and/or wherein the purified water obtained after step (iii) has a total organic carbon (TOC) value of less than 50 ppm, preferably less than 20 ppm, preferably less than 10 ppm or even more preferably less than 1 ppm.
